(19) Europäisches Patentamt
European Patent Office
Office européen des brevets

(11) Publication number: 0 320 834
A2

# (12) EUROPEAN PATENT APPLICATION

(21) Application number: 88120687.4

(51) Int. Cl.⁴: G11B 7/24

(22) Date of filing: 10.12.88

(30) Priority: 14.12.87 US 132476

(43) Date of publication of application:
21.06.89 Bulletin 89/25

(84) Designated Contracting States:
AT CH DE FR GB IT LI NL

(71) Applicant: E.I. DU PONT DE NEMOURS AND COMPANY
1007 Market Street
Wilmington Delaware 19898(US)

(72) Inventor: Laganis, Evan Dean
204 West Crest Road
Wilmington, Del. 19803(US)

(74) Representative: von Kreisler, Alek, Dipl.-Chem. et al
Patentanwälte Von Kreisler-Selting-Werner
Deichmannhaus am Hauptbahnhof
D-5000 Köln 1(DE)

## (54) Optical recording medium.

(57) An optical recording medium comprising (a) a dimensionally stable planar substrate having laminated to a surface thereof (b) an active layer comprising (1) a lower polymeric expansion layer laminated directly to the surface of the substrate and bonded to the expansion layer, (2) a retention layer, characterized in that the expansion layer contains dissolved therein a light-absorbing amount of a dye salt.

EP 0 320 834 A2

# OPTICAL RECORDING MEDIUM

## Field of the Invention

The invention is directed to optical recording media in which mark formation is by the mechanism of thermal expansion to form solid bumps. In particular, the invention is directed to such optical recording media in which the active layer has light absorbing dyes incorporated therein.

## Background of the Invention

In response to the demand for more reliable and higher capacity data storage and retrieval systems, there is considerable activity in the research and development of so-called optical disk recording systems. These systems utilize a highly focused modulated beam of light, such as a laser beam, which is directed onto a recording layer which is capable of absorbing a substantial amount of the light. The heat thusly produced causes the light-absorbing material in the areas struck by the highly focused laser beam to change chemically and/or physically, thus producing a concomitant change in optical properties, e.g., transmissivity or reflectivity, in the affected area. For readout, the contrast between the amount of light transmitted or reflected from the unaffected parts of the absorbing layer and from the marked areas of the layer is measured. Examples of such recording systems are disclosed in U.S. patents throughout the literature and in numerous U.S. patents such as U.S. Pat. Nos. 3,314,073 and 3,474,457. In recording data, a rotating disk having a light-absorptive recording layer is exposed to modulated radiation from a laser source. This radiation is passed through a modulator and appropriate optics, and the highly focused laser beam is directed onto the disk which forms by chemical and/or physical reaction of the light-absorbing layer a series of very small marks along a circular path within the light-absorptive layer. The frequency of the marks is determined by the modulator inputs. Using laser beams with a focused spot diameter of 1 micron or less, data can be stored at a density of $10^8$ bits/cm$^2$ or higher.

Feyrer et al., in EPO Patent Application 0136070, disclose an optical recording medium in which mark formation is achieved in the form of a bump by the action of a laser beam upon an active layer comprised of two polymeric layers which have different physical properties when they are simultaneously subjected to a high temperature such as that produced from the action of a write laser beam.

To obtain effective bump formation, i.e., to obtain the formation of bumps which can be read by means of a laser beam, it is necessary that the lower of the two bump-forming layers described above contain a light-absorbing material such as a dye or pigment in order to absorb enough energy at the write beam wavelength (830 nm). Heretofore, lasers emitting in the visible light region (486-633 nm) were used for media of this kind. A wide variety of dyes is readily available on a commercial scale which absorb light in this region. Among these are such dyes as nigrosine dye, aniline blue, Calco Oil Blue, chrome yellow, ultramine blue, Quinoline Yellow, methylene blue chloride, Monastral Blue, Malachite Green Ozalate, Rose Bengal, Monastral Red, Sudan Black BM, and mixtures thereof. Other examples of dyes include those disclosed in U.S. Patent 3,689,768 at col. 3, lines 1-22 and U.S. Patent 4,336,545 at col. 8, lines 53-68, which patents are incorporated herein by reference with respect to these dyes or pigments.

However, to use dyes which absorb light in the visible light region requires the use of expensive and less reliable gas discharge lasers. It would therefore be highly desirable to be able to use less expensive and more reliable semiconductor lasers which emit light in the near-infrared red (near-IR) light region (833 nm). Unfortunately, dyes which absorb light effectively in this region are not so plentiful and, moreover, they are difficult and sometimes impossible to disperse adequately in the polymer layers of such bump-forming optical recording media. That is, they were not adequately dissolved in the polymeric layer and thus did not absorb enough energy from the write laser beam to effect good readable bump formation at low concentrations. Thus, the usefulness of such bump-forming optical recording media is severely limited.

## Summary of the Invention

In a primary aspect, the invention is therefore directed to an optical recording medium comprising:

(a) a dimensionally stable planar substrate having laminated to a surface thereof

(b) an active layer comprising

(1) a lower polymeric expansion layer laminated directly to the surface of the substrate, the expansion layer having a low thermal conductivity, high TCE and Tg below 20C, and having completely dissolved therein from 0.5 to 15% wt. of a dye salt corresponding to the structure

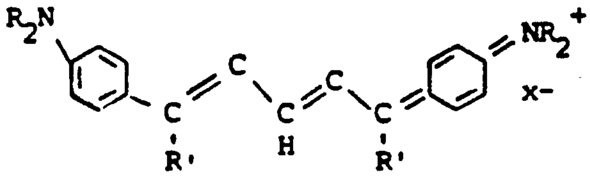

wherein
R is independently selected from $C_{1-4}$ alkyl groups;
R′ is independently selected from

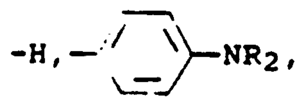

and alkyl, aryl, or alkaryl groups any of which may be substituted, R′ optionally completing a cyclic structure with the polymethine chain or with the adjacent phenyl ring via a ring substituent; and X is an anionic moiety selected from fluorosulfonate; perfluoroalkyl, alkyl, alkaryl, aralkyl, aryl, fluoroaryl, vinylic and acrylic sulfonates; 2-acrylamido-2-methylpropanesulfonate; and alkyl, alkaryl, aralkyl, aryl, fluoroaryl and acrylic carboxylates, and

(2) bonded to the expansion layer an upper retention layer comprising a solid non-elastic polymer having low thermal conductivity, low TCE and Tg above 70C

## Brief Description of the Drawing

The Drawing consists of three figures, of which Figure 1 is a schematic representation of the operation of the invention in the write mode; Figure 2 is a schematic representation of the operation of the invention in the read mode; and Figure 3 is a schematic representation of the operation of the invention in the erase mode.

## Prior Art

U.S. 4,364,986 describes the use of a dye-containing layer of a film-forming polymeric binder as a recording layer for optical disks. The dye in this layer serves to absorb the laser energy turning this energy to heat which then causes the dye to undergo a physical change (ablation and/or melting) resulting in a recorded mark. This patent mentions 1,1,5,5-tetrakis (p-dimethylaminophenyl)-2,4-pentadien-1-ol chloride as an example of a suitable ionic dye for this type of structure.

U.S. 4,547,444 describes the use of a certain class of trimethine and longer chain aryl polymethine dyes associated with specific counterions (such as sulfonates) as recording layers for optical disks. As in the above-referred '986 patent described above, the dye layer serves to absorb the laser energy which thermally alters the dye to yield a recorded mark.

EPO Patent Application 0136070 is directed to a recording structure in which the dye's only function in the expansion layer is to absorb the laser energy and convert it to heat. The heat generated causes the expansion layer to form a bump and thus information is recorded. In this structure, the dye does not undergo any permanent physical changes.

## Detailed Description of the Invention

A. Substrate

The substrate materials which can be used in the invention are those which are dimensionally stable within the assembled structure. The substrate material preferably has a low thermal coefficient of expansion (TCE). The substrate can be either opaque or transparent and can be made of virtually any of the conventional substrate materials such as aluminum, glass, quartz, copper, brass, steel, magnesium, cadmium, silver, gold, polyester film, poly(tetrafluoroethylene) film, polyamide films, polycarbonates and other plastic or composite materials. In addition, the substrate may be coated with a smooth layer of an adherent second material to provide further surface uniformity and/or to act as a base for other functional layers to be deposited thereon. In all cases it will be recognized that chemical inertness as well as dimensional stability over a prolonged period of time are essential properties of whatever substrate material is chosen. Aluminum, polycarbonates and glass are preferred substrate materials.

B. Active Layer

As taught in EPO Patent Application 0136070, erasable optical storage media using the dyed polymeric layer of the invention are comprised of a substrate and an active layer laminated thereto comprising a first material for the expansion layer and a second material for the retention layer, the dual layer being susceptible to expansion and relaxation, to writing data thermally, to reading data optically, and preferably to erasing data thermally and mechanically, the first (expansion layer) material and the second (retention layer) material being bonded together and the first material and the second material remaining in the same physical state upon the expansion and relaxation of the dual layer. Data are written on the dual layer structure by heating the second material above its glass transition temperature to make the second material rubbery, heating the first material to elastically expand it within its elastic limit, thus causing the heated first material to expand elastically and push up the heated second material. The expanded second material is then cooled to below its transition temperature while the first material is in a stretched, expanded condition, the cooled second material then forming a reversibly fixed deformation and holding the first material in the stretched, expanded condition. Heating is accomplished in at least the lower of these layers by absorption of laser radiation by the dyed polymeric material of this invention. Typically data bits are recorded and erased in the storage medium by generating a first laser beam and a second laser beam. The first material absorbs and the second material transmits the first laser beam, and the second material absorbs the second laser beam. The first laser beam is focused on the first material to heat and elastically expand the first material to write the data bit, and the second laser beam is focused on the second material to heat the second material and to erase the data bit. During writing of the data bit, the second material is sufficiently softened by the expanding material to form a dome over the expanded material. Due to its rapid cooling, the dome holds or retains the expanded first material in place until the dome is heated by the second focused laser which allows both the first and second materials to relax into their original positions. Thus, the data bit is in the form a solid bump, not a hollow bump or "blister".

Polymeric components which are the primary components of the first material of the expansion layer as well as the second material of the retention layer usually are relatively transparent to incident laser radiation. Therefore dyes or colorants are typically added to each layer to increase absorption for the specified laser radiation. The dye or colorant functions to convert incident laser radiation into thermal energy by a substantially nondestructive mechanism which, except for physical thermal effects, is free of chemical change. For the high resolution needed, the dye or colorant should be completely dissolved in the polymeric matrix to form a solid homogeneous solution at concentrations which efficiently absorb the laser radiation in the layer thickness used.

The dye salts of this invention have been found to be useful absorbers in the dual layer structures, particularly for laser sources emitting in the near infrared region of the spectrum. The dye salts form homogeneous, solid, polymeric solutions which are useful in either the expansion or retention layers. Complete solid solutions of these dyes in elastomeric polymeric materials are particularly useful as the expansion layer. Dye salts contemplated to be within the scope of this invention correspond to the structure:

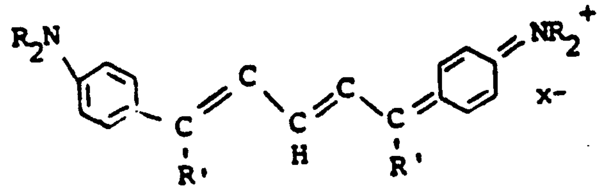

wherein

R is independently selected from $C_{1-4}$ alkyl groups;

R′ is independently selected from

-H, 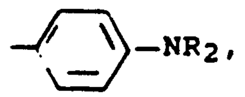

and alkyl, aryl or alkaryl groups, any of which may be substituted, R′ optionally completing a cyclic structure with the polymethine chain or with the adjacent phenyl ring via a ring substituent; and x is an anionic moiety selected from fluorosulfonate; perfluoroalkyl and alkyl, alkaryl, aralkyl, aryl, fluoroaryl, vinylic and acrylic sulfonates; 2-acrylamido-2-methylpropanesulfonate; alkyl, alkaryl, aralkyl, aryl, and fluoroarylcarboxylates. Particularly preferred among these dye salts is 1,1,5,5-tetrakis(p-dimethylaminophenyl)-2,4-pentadien-1-ol trifluoromethylsulfonate.

The retention layer will ordinarily contain at least 0.5% wt. of the dye salt in order to obtain adequate light absorption and at least 2% wt. However, one of the advantages of this type of dye is that it can be used effectively at very small concentrations. Thus a very small amount can be used which does not adversely affect the rheological properties of the expansion and retention layers. It is therefore unnecessary to use more than 15% wt. of the dye salt and preferably no more than 10% wt. or even less. Though still higher dye concentrations, e.g., up to 10% wt., can be used, they are little, if any, more effective.

The first material and the second material preferably are polymers are preferably amorphous polymers. Specifically, the first material can be, for example, elastomers having the above-mentioned thermoplastic properties and physical characteristics. Suitable elastomers include butyl rubbers, silicone rubbers, natural rubbers, ethylene copolymers, styrene-butadiene rubbers and a number of other synthetic rubbers.

Suitable polymers for the second material are amorphous polymers having the thermosetting or thermoplastic properties with characteristics mentioned above. These may include, for example, cellulose acetate, cellulose acetate-butyrate, polystyrene, polysulfonamide, polycarbonate, cellulose nitrate, hydroabietyl alcohol, such as as Abitol AUK 257[6], poly(ethyl-methacrylate), poly(vinyl butyral), aromatic polyester, polyamides, epoxy resins and a wide variety of combinations thereof. Other amorphous polymers that can be used include acrylic polymers, polyvinyl acetate, silicone resins, alkyd resins, styrene-butadiene copolymers, vinyl chloride-vinyl acetate copolymers, nitrocellulose, ethylcellulose, polyvinyl alcohol, gelatin glue, casein, egg albumin and various other polymers.

While the above-described dye salt will always be used in the expansion layer, it may also be used in the second (retention) layer. Either or both layers may also contain other dyes or secondary pigments. Examples of such supplemental dyes or pigments that can be used to tune the first material or the second material are nigrosine dye, aniline blue, Calco Oil Blue, chrome yellow, ultramine blue, Quinoline Yellow, methylene blue chloride, Monastral Blue, Malachite Green Ozalate, Rose Bengal, Monastral Red, Sudan Black BM, and mixtures thereof. Other examples of dyes include those disclosed in U.S. Patent No. 3,689,768 at column 3, lines 1-22, and U.S. Patent No. 4,336,545 at column 8, lines 53-68, which patents are incorporated herein by reference for these dyes or pigments. As used herein, the term "acrylic" includes both acrylic and methacrylic configurations.

The dye-containing layers of the invention may be used in optical data storage media and systems as described in European Patent Publication 0136070 and equivalent Japanese Patent Publication 60/69846, the subject matter of which is incorporated herein by reference.

The use of the dyed layers of this invention will now be described by reference to the three Figures of the Drawing.

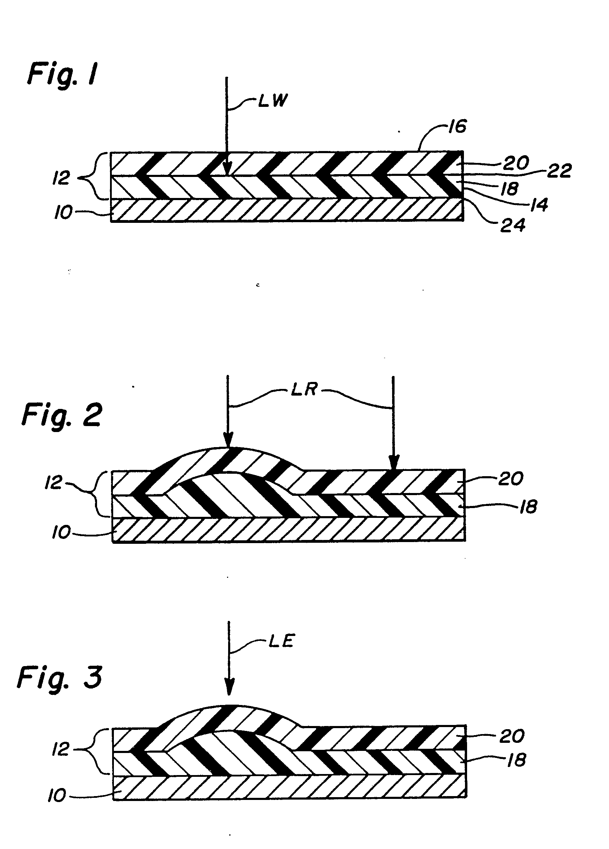

Figure 1 shows a section of a small bit area of an optical disc for storing one data bit of logic 1 or logic 0. In particular, each bit area of the optical disc includes a substrate 10 and a dual layer 12 deposited on the substrate 10. As will be further described, the dual layer 12 is susceptible to expansion and relaxation, to writing data thermally (expansion), to erasing data thermally and mechanically (relaxation) and to reading

data optically. Fig. 1 shows the dual layer 12 in a condition of relaxation corresponding to one logic state, e.g., logic 0, whereas Fig. 2 shows the dual layer 12 in the condition of expansion representing the other logic state, e.g., logic 1.

The dual layer 12 has a bottom layer 14 of one material 18 and a top layer 16 of another material 20. Other than expansion and relaxation of material 18 and transitional softening and hardening of material 20, neither material changes physical state upon expansion or relaxation of the dual layer 12 thereby increasing the speed or data rate and reducing the power requirements at which data bits can be written and erased. The material 18 and material 20 are bonded together at their interface 22 so as to erase a data bit at a high data rate, as will be further described. In addition, as shown in Fig. 2, the material 18 is deposited on the substrate 10 such that at their interface 24, material 18 does not delaminate from substrate 10 upon expansion of the dual layer 12. This substantially eliminates any "creep" of layer 14 about substrate 10 whereby the bit area will remain optically smooth after repeated erase/write cycles, as will be further described. Thus, as illustrated in Fig. 2, as a result of the bonding at interface 22 and at interface 24, upon expansion of the dual layer 12, material 18 and material 20 will continue to be bonded together, while material 18 will still be in contact with and not be delaminated from, substrate 10.

In Fig. 2, material 18 and material 20 undergo the mechanical forces which are produced in response to the expansion of the dual layer 12. As will be further described, these forces function, in part, to relax the dual layer 12 to the condition shown in Fig. 1 for the purpose of quickly erasing a data bit.

Material 18 of the expansion layer 14 has (1) low thermal conductivity, (2) a high coefficient of thermal expansion, (3) a glass transition temperature, $T_g$, considerably below ambient temperature. That is, in connection with Tg, the material 18 is rubbery at ambient temperature as opposed to being in a glassy or brittle condition. This means that only relatively low-power heating is required to heat the rubbery material, resulting in localized, extensive or large and rapid expansion of the material 18 due to the action of these three properties. Also, as a result of this localized expansion, high data storage density can be achieved. Material 18 also is relatively highly cross-linked, so that upon expansion it undergoes substantially no viscous flow. In addition, material 18 is elastic, (i.e., it has a high coefficient of elasticity) so that upon expansion it will stretch without exceeding its elastic limit, resulting in the production of springlike force $F_1$ which tends to return material 18 to its relaxed condition upon cooling or removal of the stress. Other properties and characteristics of material 18 will be described below.

Material 20 of the retention layer 16 has (1) a glass transition temperature, $T_g$, for example 100 °C, which is substantially higher than ambient temperature. Thus, at ambient or normal temperatures, material 20 is glassy or brittle, but when heated above its glass transition temperature, it immediately transforms through a leathery or pliable condition into a rubbery condition. Material 20 also has (2) a relatively low thermal conductivity and (3) relatively low coefficient of thermal expansion (TCE). Therefore, low-power heat can be used to quickly and locally expand material 20 due to these three properties. Also, material 20 will cool relatively quickly below its glass transition temperature due to the exposure of its top surface to ambient condtions, thereby "freezing in" the expanded condition of dual layer 12, as shown in Fig. 2.

Material 20 may be either lightly cross-linked or be dependent upon chain entanglements and may be thermoplastic, viscoelastic and have a relatively low coefficient of elasticity. Therefore, upon expansion, the cross-linking limits the viscous flow and a stretching of material 20 occurs, producing the force $F_3$. Also, the force $F_2$ is produced in material 20 upon expansion.

Furthermore, material 20 has a variable modulus of elasticity that varies with temperature and results in force $F_4$ being produced upon expansion. This modulus decreases with increasing temperature, which means that the material 20 needs less of a stress to induce a strain in the material 20. This results in a strain being induced very quickly at low light power, resulting in a bump being formed, as shown in Fig. 2.

Layers 14 and l6 are optically coupled so that substantially all the light that is propagated through layer 16 is absorbed in layer 14. This optical coupling is provided by the material 20 having about the same index of refraction as material 18. Thus, since substantially all this light can be coupled through top layer 16 to bottom layer 14, there is essentially no loss of light and therefore, low-power light sources can be used.

Material 18 and material 20 are also capable of being optically tuned to any of a plurality of desired or given wavelengths of light. To accomplish this tuning, materials 18 and 20 can each constitute a light-transparent material that has added to it a dye or pigment to cause the respective material 18 and material 20 to absorb the given wavelength of light. For reasons to be discussed more fully below, materials 18 and 20 will be tuned to absorb different wavelengths of light with material 20 being substantially, but not entirely, transparent to the wavelength of light that can be absorbed by the material 18. This optical tuning has the advantage of making the optical data storage medium highly flexible in that it can be tuned to operate with a variety of different laser sources that are currently available or that might become available in the future.

Layers 14 and 16 also are thermally coupled together. That is, the material18 and the material 20 have

different heat capacities and with material 18 being on the inside and material 20 being on the outside of dual layer 12, the latter can cool more quickly, as previously mentioned.

Write Mode

Fig. 1 and Fig. 2 illustrate a method for writing a data bit thermally at the bit area. With reference to Fig. 1, assume that the bit area of the erasable optical data storage medium is in the relaxed condition described in connection with Fig. 1. In this relaxed condition, at ambient temperature, material 18 is above its glass transition temperature, and, therefore, rubbery, whereas material 20 is below its glass transition temperature and therefore glassy. Also, at this time none of the mechanical forces $F_1$-$F_4$ have been produced. Furthermore, the material 18 and material 20 have the other properties and characteristics previously described, including the fact that material 18 and material 20 being highly elastic and slightly elastic, respectively.

Then, to write a data bit thermally, the method includes heating the material 18 to expand the material 18 within its elastic limit. At this time of heating material 18, material 20 is also heated above its glass transition temperature, which softens the material 20 and makes it rubbery. Preferably, as shown in Fig. 1, the heating of materials 18 and 20 is accomplished by generating a laser beam LW that has a wavelength to which material 20 is substantially transparent and to which material 18 is absorptive and focusing the laser beam LW through the material 20 onto the material 18. The light of the laser beam LW is slightly absorbed by the material 20 to produce the heat for making this material 20 rubbery and is substantially absorbed by material 18 for elastically expanding the material 18 onto the material 20.

Then, as shown in Fig. 2, the heated material 18 expands and pushes up the heated material 20 creating a solid deformation or bump, while the heated material 18 stretches elastically. The next step includes cooling the expanded material 20 below its glass transition temperature, to harden it while material 18 remains in the stretched expanded condition. Upon cooling, material 20 forms a reversibly fixed deformation or bump and holds the material 18 in the stretched, expanded condition. Thus, at this time, a data bit of one logic level, e.g., logic 1, has been written with the bit area being in the expanded condition described in connection with Fig. 2. If a logic 0 were to be rewritten at the bit area, then laser beam LW would not be actuated and the bit area would remain in the relaxed condition shown in the second position in Fig. 2.

As an alternative to the above-described heating step, in which material 20 slightly absorbs the light of the laser beam LW, material 20 may absorb no such light. Rather, a small amount of the heat that is absorbed in material 18 is conducted or transferred to material 20 to heat the latter above its glass transition temperature.

As another alternative to the heating step shown in Fig. 1 in which only the laser beam LW is used, the method can include first heating the material 20 above its glass transition temperature, by generating a second laser beam, e.g., LE, and focussing that laser beam on the material 20. The second laser beam is of a wavelength that is substantially absorbed by material 20. Immediately thereafter, the laser beam LW is actuated and focussed on the material 18 as described above, with the method for writing the data bit thermally continuing also as described above. One advantage to using the second laser beam initially is more quickly to bring the material 20 to a rubbery condition and, thereby, be able to form a data bit more quickly.

Erase Mode

Fig. 3 discloses the method for erasing a data bit thermally and mechanically. Assume that the bit area has a data bit written as illustrated in Fig. 3 which shows the same expanded condition for the bit area as in Fig. 2 in which the material 20 is holding the material 18 in an expanded, stretched condition at ambient temperature. Then, the method includes heating the material 20 to a temperature above the glass transition temperature to make the material 20 rubbery. This heating of the material 20, as shown in Fig. 3, can be accomplished by generating and focussing the laser beam LE onto material 20. The heating of material 20 causes a relaxation of the retention action by material 20 of material 18, thereby allowing the mechanical forces $F_1$-$F_4$ rapidly to return the bit area to the relaxed condition shown in Fig. 1. In particular, the elastic force $F_1$ in the material 18 is the dominant force causing a quick return of the dual layer 12 to the relaxed condition. Upon this relaxation, the material 20 is pulled back in by force $F_1$, and force $F_3$ and has an intermediary condition forming a pit. After being totally cooled to ambient temperature, the material 20 and

the overall dual layer 12 returns to the fully relaxed condition, as was described in connection with Fig. 1. The dual layer 12, upon cooling, returns to an optically smooth condition in that any peaks and valleys (not shown) within the material 20 are no higher and lower than 1/4 wavelength of light.

Moreover, as indicated above, dual layer 12 has a relaxation time which is dependent in part on forces produced in response to the viscoelastic properties of the material 18. This relaxation time accelerates upon increasing the temperature of material 20.

## Read Mode

Fig. 2 illustrates a method of reading a data bit optically. Assume that a data bit, for example, a logic 1, has been written at the left bit area as shown in Fig. 2 in which the bump has been formed as described above. To read this data bit, the laser beam LR, which is at a lower power level than is used for writing or erasing the data bit, is generated and focussed on the bump of the material 20. Similarly, assume a data bit of logic 0 has been written in the right bit area as shown in Fig. 2, i.e., no bump is produced. Again, the laser beam LR at lower power level than is used for writing or erasing the data bit is generated and focused on the material 20.

In both read instances, the light of laser beam LR will be reflected from the material 20. Due to the difference in thickness or height between the expanded condition of dual layer 12 shown in the left portion of Fig. 2 and the relaxed condition of the dual layer 16 shown in the right portion of Fig. 2, there is a phase shift between the light of laser beam LR that is reflected from the material 20, respectively. This phase shift or difference can be detected with a high signal-to-noise ratio to distinguish a logic 1 bit from a logic 0 bit. Alternatively, there will be a difference in the light scattering and hence difference in amplitude of the reflected light between the left and right portion of Fig. 2. This difference in amplitude can be detected with a high signal-to-noise ratio as logic 1 and logic 0 bits. More light scattering and, hence, reduced amplitude will be detected in the left portion of Fig. 2 condition than the right portion condition.

The fabrication of optical recording media in accordance with the invention is illustrated by the following example.

## Example

In the following example, all mixing and storage were carried out at room temperature in an inert atmosphere of nitrogen in order to minimize any chemical or physical alteration of the components.

| A. Expansion Layer | |
|---|---|
| | phr (by Wt.) |
| Resin Solution (100 phr Morton Thiokol Solithane[1] 113, 6.5 phr ethyl-TAP Dye* and 180 phr 4:1 Methyl Isobutyl Ketone/Nitromethane) | 286.5 |
| Surfactant Solution (1 phr 3M Fluorad FC-430[2] dissolved in 9 phr Methyl Isobutyl Ketone/Nitromethane) | 0.13 |
| Hardener Solution (13.2 phr Triisopropanolamine, 7.3 phr Morton Thiokol C113-300[3] and 20 phr 4:1 Methyl Isobutyl Ketone/Nitromethane | 40.5 |

*1,1,5,5-tetrakis(p-diethylaminophenyl)-2,4-pentadien-1-ol trifluoromethanesulfonate

The surfactant and hardener solutions were added in succession to the resin solution to give the expansion layer solution. Once the hardener solution is added, the time for filtering and coating should not exceed 2 hours. The expansion layer solution was filtered three times through a 47 mm 0.2 micron Teflon filtration unit composed of type 316 stainless steel components. The expansion layer solution (4 ml) was then applied to a clean polycarbonate substrate spinning at 400 rpm over 5.6 sec. The polycarbonate substrate was then held at zero speed for 5 sec to allow leveling to occur before final spin-off at 1000 rpm for 30 sec. This layer was then vertically cured for 16 hr. at 100 °C in a convection layer.

| B. Retention Layer | |
|---|---|
| | phr (by Wt.) |
| Resin Solution (100 phr Dow Chemical DEN-444[4] dissolved in 700 phr 3:1 Cyclohexanone/Nitromethane) | 800 |
| Trimellitic Anhydride (TMA) | 30 |
| Savinyl Scarlet RLS Red (Sandox Chemical) [5] | 60 |
| 1,1′,3,3,3′,3′-Hexamethylindotricarbocyanine Iodide (HITC) | 8 |

TMA, RLS Red and HITC are successively dissolved in the resin solution to give the retention layer solution. The retention layer solution was filtered and coated within a 2 hr. time period after preparation. The retention layer solution was then successively filtered through a Pall Ultiper DFA 0.2 micron absolute Teflon[7] filter at 5 psi and two 0.2 micron 47 mm millipore filters at 5-10 psi nitrogen. The retention layer solution (4 ml) was then applied to the expansion layer coated disk at 400 rpm over 2.6. sec. The disk was then immediately spun-off at 2500 rpm for 30 sec. The completed disk was then horizontally cured for 6 hr. at 125 °C in a convection oven.

The above-described optical disk was found to be capable of satisfactory operation at a signal-to-noise ratio of greater than 60 dB.

Tradenames

(1) Solithane® is a tradename of Morton Thiokol, Inc., Chicago, Illinois for urethane prepolymer.

(2) Fluorad® FC-430 is a tradename of the 3M Corp., St. Paul, MN for hydroxylated alkyl sulfonamide.

(3) C113-300 is a trade designation of Morton Thiokol, Inc., Chicago, Illinois for triglycol polyester curing agent.

(4) DEN-444 is a tradename of Dow Chemical Co., Midland, MI for epoxy prepolymer.

(5) Sandoz Chemical Co., Charlotte, North Carolina.

(6) Abitol® is a tradename of Hercules, Inc., Wilmington, DE for hydroabietyl alcohol.

(7) Teflon® is a registered trademark of E. I. du Pont de Nemours and Co., Wilmington, DE for flurocarbon resins.

## Claims

1. An optical recording medium comprising

(a) a dimensionally stable planar substrate having laminated to a surface thereof and

(b) an active layer comprising

(1) a lower polymeric expansion layer laminated directly to the surface of the substrate, the expansion layer having a low thermal conductivity, high TCE and Tg below 20C, and having completely dissolved therein from 0.5 to 15% wt. of a dye salt corresponding to the structure

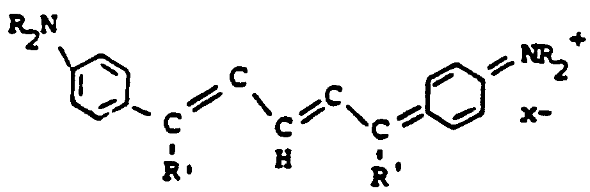

wherein

R is independently selected from $C_{1-4}$ alkyl groups;

R′ is independently selected from

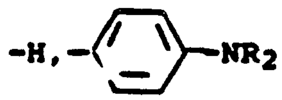

and alkyl, aryl or alkaryl groups any of which may be substituted, R′ optionally completing a cyclic structure with the polymethine chain or with the adjacent phenyl ring via a ring substituent; and X is an anionic moiety selected from fluorosulfonate; perfluoroalkyl, alkyl, alkaryl, aralkyl, aryl, fluoroaryl, vinylic and acrylic sulfonates; 2-acrylamido-2-methylpropanesulfonate; and alkyl, alkaryl, aralkyl, aryl, fluroaryl and acrylic carboxylates; and
(2) bonded to the expansion layer an upper retention layer comprising a solid non-elastic polymer having low thermal conductivity, low TCE and Tg above 70C

2. The medium of claim 1 in which the cationic moiety of the dye salt is 1,1,5,5-tetrakis[p-di($C_{1-4}$ alkyl)-aminophenyl]-2,4-pentadien-1-ol.
3. The medium of claim 2 in which the dialkyl group within the cationic moiety is dimethyl.
4. The medium of claim 3 in which the dialkyl group within the cationic moiety is diethyl.
5. The medium of claim 1 in which the anionic moiety is trifluoromethanesulfonate.
6. The medium of claim 1 in which the expansion layer polymer is an elastomer.
7. The medium of claim 1 in which the retention layer polymer is an epoxy resin.

Fig. 1

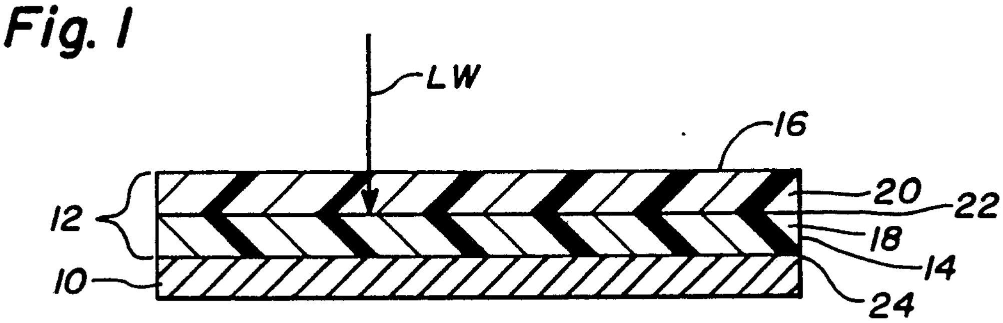


Fig. 2

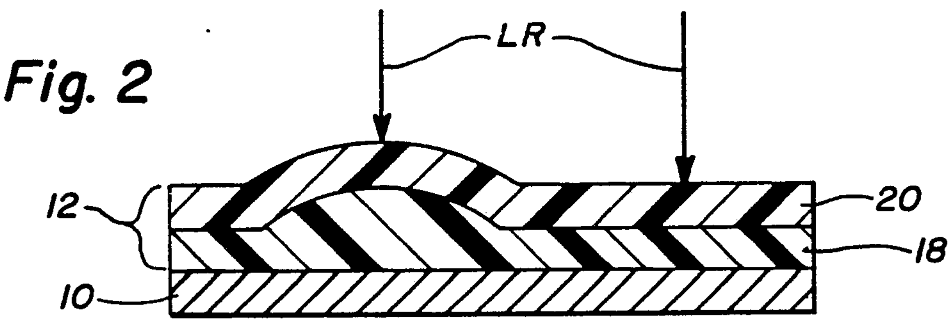


Fig. 3